# EUROPÄISCHE PATENTSCHRIFT

(11) **EP 1 287 087 B1**
(45) Veröffentlichungstag und Bekanntmachung des Hinweises auf die Patenterteilung: **05.07.2006**
(21) Anmeldenummer: 01943366.3
(22) Anmeldetag: 15.05.2001
(51) Int. Cl.: C09J 175/04, C08G 18/10, C08K 3/36

(54) **1-KOMPONENTEN-POLYURETHAN-KLEBSTOFF**
SINGLE-COMPONENT POLYURETHANE ADHESIVE
ADHESIF POLYURETHANNE A UN COMPOSANT

(30) Priorität: 23.05.2000 DE 10025528
(43) Veröffentlichungstag der Anmeldung: 05.03.2003
(73) Patentinhaber: Henkel Kommanditgesellschaft auf Aktien, 40589 Düsseldorf (DE)
(72) Erfinder: GRÜNEWÄLDER, Bernhard, 40721 Hilden (DE); SCHÖTTMER, Bernhard, 40789 Monheim (DE); HALLER, Werner, 40699 Erkrath (DE); KLAUCK, Wolfgang, 40670 Meerbusch (DE); NESS, Birgit, 40764 Langenfeld (DE)
(86) Internationale Anmeldenummer: PCT/EP2001/005498
(87) Internationale Veröffentlichungsnummer: WO 2001/090271

(56) Entgegenhaltungen:
- EP-A- 0 172 337
- EP-A- 0 369 607
- EP-A- 0 386 879
- US-A- 5 110 892
- Becker/Braun, Kunststoff-Handbuch, Bd. 7/Polyurethane (1983), Carl Hanser Verlag, München, S. 310/311

## Beschreibung

Die Erfindung betrifft einen 1-Komponenten-Polyurethan-Klebstoff (1-K-PU-Klebstoff) auf der Basis mindestens eines NCO-terminierten PU-Prepolymeren und mindestens eines Verdickungsmittels sowie gegebenenfalls von Additiven. Die Erfindung betrifft auch die Herstellung dieses 1-K-PU-Klebstoffes sowie seine Verwendung.

Derartige 1-K-PU-Klebstoffe sind bekannt. So wird in der DE 23 65 623 zum Verbinden von nassem Holz ein flüssiges polyfunktionelles Polyisocyanat-Vorkondensat mit einem NCO-Gehalt von 2 bis 15 Gew.-% beschrieben. Dem PU-Vorkondensat können Stoffe zugesetzt werden, zum Beispiel Farbstoffe, Lösungsmittel, Wasser und Mittel zur Steuerung der Schaumbildung. Vor allem können auch Füllstoffe zugesetzt werden, um die Verarbeitbarkeit zu verbessern, zum Beispiel um die Viskosität zu erhöhen, ihr thixotrope Eigenschaften zu verleihen, ihr Eindringen in das Holz zu verhindern, ihre provisorische Haftung beim Vorpreßvorgang zu erhöhen und dergleichen. Unter den zahlreichen konkreten Füllstoffen wird unter anderem auch kolloidales Siliciumdioxid und Silicagelpulver beschrieben. In den Beispielen wird vor allem Holzmehl verwendet. Obwohl 15 bis 25 Gew.-% an derartigen Füllstoffen zugesetzt werden, sind die Klebstoffe flüssig und neigen zum Tropfen, wenn auch weniger als ohne den Füllstoffzusatz (siehe Seite 15, unten).

Daraus ergibt sich die erfindungsgemäße Aufgabe, einen 1-K-PU-Klebstoff mit solch besonderen rheologischen Eigenschaften bereit zu stellen, daß er einerseits genügend fließfähig ist, um zum Beispiel aus Druckdosen oder Kartuschen herausgedrückt zu werden, aber andererseits ein ausreichendes Standvermögen zeigt und nicht tropft oder an senkrechten Flächen nach unten fließt. Selbstverständlich sollen die für einen Konstruktions- und Montage-Klebstoff üblichen klebetechnischen Eigenschaften erhalten bleiben.

Die Lösung der Aufgabe ist den Patentansprüchen zu entnehmen. Sie besteht im wesentlichen darin, anstelle von verzweigten oder gar vernetzten PU-Prepolymeren möglichst lineare PU-Prepolymere zu verwenden und als Verdickungsmittel hochdisperse Kieselsäure.
Gegenstand der Erfindung ist also ein pastöser 1-Komponenten-Polyurethan-Klebstoff (1-K-PU-Klebstoff) auf der Basis mindestens eines NCO-terminierten PU-Prepolymeren und mindestens eines Verdickungsmittels sowie gegebenenfalls mindestens eines Additives, wobei
A) das NCO-terminierte PU-Prepolymer der in Anspruch 1 angeführten Definition entspricht, und
B) das Verdickungsmittel eine hochdisperse Kieselsäure in einer Konzentration von 2,0 bis 8,0 Gew.-%, bezogen auf das Prepolymer, ist und
C) als Additiv jeweils weniger als 10 Gew.-%, bezogen auf das Prepolymer, enthalten ist.

Als pastös wird ein Stoff mit teigiger Konsistenz bezeichnet, der eine Viskosität von 20 bis 100 Pas bei Raumtemperatur (23 °C) aufweist, gemessen nach RTV ISO 2555. Der erfindungsgemäße 1-K-PU-Klebstoff weist darüber hinaus ein spezielles rheologisches Verhalten auf: Seine Ausspritzmenge nach DIN EN 29048 ist größer als 2 000, vorzugsweise größer als 2 300 und insbesondere größer als 2 600 g/min bei 23 °C. Trotz dieser großen Ausspritzmenge ist das Standvermögen für einen Konstruktions- und Montage-Klebstoff ausreichend hoch. Es ist nach DIN EN 27390 kleiner als 6,0, vorzugsweise kleiner als 4,0 und insbesondere kleiner als 2,0 g nach 5 min.

Eine Voraussetzung für dieses besondere rheologische Verhalten besteht darin, daß das PU-Prepolymer weitgehend linear ist. Dazu beträgt die durchschnittliche Funktionalität sowohl der Polyol-Komponente als auch der Polyisocyanat-Komponente kleiner als 2,15, vorzugsweise kleiner als 2,10 und insbesondere 2,0.

Die Polyolkomponente zur Herstellung des PU-Prepolymeren besteht zumindest aus einem Polyol. Geeignete Polyole können sein: Polyester-Polyole - z. B. der Polyester Desmophen 1700 aus Adipinsäure und Diethylenglykol von der Fa. Bayer, der Polyester PE 231 aus Adipinsäure, Isophthalsäure und Diethylenglykol der Fa. Henkel und der Polyester PE 218 aus Adipinsäure, Isophthalsäure, Propylenglykol und Diethylenglykol der Firma Henkel - sowie Polyether-Polyole, z.B. Polyethylen-Glykol und Polypropylen-Glykol.
Die Polyole sollten ein Molekulargewicht von 200 bis 8 000, vorzugsweise von 600 bis 4 000 und insbesondere von 1 000 bis 3 000 g/Mol haben.

Die Polyisocyanat-Komponente zur Herstellung des PU-Prepolymeren enthält mindestens ein Polyisocyanat. Es kann sowohl aliphatisch als auch cycloaliphatisch und insbesondere aromatisch sein. Bevorzugte Isocyanate sind: MDI, IPDI, TDI und TMXDI.

Der mengenmäßige Anteil der Polyol-Komponente und der Polyisocyanat-Komponente wird durch das Äquivalenzverhältnis der NCO-Gruppen und der OH-Gruppen definiert. Das Äquivalenzverhältnis NCO/OH liegt im Bereich von 3,5 bis 7,5, vorzugsweise im Bereich von 4,0 bis 6,0 und insbesondere im Bereich von 4,5 bis 5,5.

Je nach Größe des Überschusses an NCO-Gruppen gegenüber OH-Gruppen liegt der NCO-Gehalt im Bereich von 7,0 bis 15,0 Gew.-%, bezogen auf das Prepolymer, vorzugsweise im Bereich von 10 bis 15 Gew.-%.

Die Viskosität des PU-Prepolymeren liegt bei 23 °C im Bereich von 500 bis 12 000, vorzugsweise im Bereich von 1 000 bis 6 000 und insbesondere im Bereich von 1 500 bis 3 500 mPas, gemessen nach Brookfield.
Das PU-Prepolymer wird auf bekannte Weise hergestellt, vorzugsweise frei von Lösemitteln und Wasser. Auch sollten die Reaktionsbedingungen, insbesondere die Katalysatoren und Temperaturen, so gewählt werden, daß keine Verzweigungen auftreten.

Das Verdickungsmittel sollte möglichst ein plastisches Fließverhalten bewirken. Das heißt, bis zu Spannungswerten, die kleiner als die Fließgrenze sind, verhält sich der PU-Klebstoff wie ein fester Körper und ist als solcher z.B. elastisch verformbar. Der PU-Klebstoff fließt erst dann, wenn die Schubspannung einen bestimmten Wert überschreitet (Fließgrenze). Dann nimmt die Schergeschwindigkeit mit der um die Fließgrenze verminderten Schubspannung zu. Die von der Schergeschwindigkeit abhängige Viskositätsänderung sollte jedoch von der Scherzeit möglichst unabhängig sein, damit sich die Viskosität praktisch ohne Ruhezeit auf den ursprünglichen Wert zurückbildet, wenn die Schubspannung entfällt. Ein in diesem Sinne geeignetes Verdickungsmittel ist die hochdisperse Kieselsäure, und zwar bei einem Zusatz von 2 bis 8, vor allem 3 bis 7 und insbesondere 4 bis 6 Gew.-%, bezogen auf das Prepolymer.
Unter hochdisperser Kieselsäure wird insbesondere eine pyrogene Kieselsäure verstanden, die durch Flammenhydrolyse hergestellt wurde.
Die hochdisperse Kieselsäure sollte überwiegend hydrophob sein. Das ist dann der Fall, wenn sie nur von einer Mischung aus Methanol und Wasser benetzt wird, deren Methanol-Anteil mehr als 50 Vol.-% beträgt.

Von diesen Verdickungsmitteln, die die Rheologie des Klebstoffes bestimmen, sind die Füllstoffe zu unterscheiden. Deren Hauptzweck besteht darin, das Volumen und/oder das Gewicht zu erhöhen. Sie können aber auch die technische Verwendbarkeit verbessern, z.B. den Schwund verringern oder die Härte, die Festigkeit und die Elastizität beeinflussen. Sie können aber auch als Farbmittel dienen. Zu diesen Füllstoffen zählen - sei es als Pulver oder als Fasern - vor allem Carbonate, insbesondere Calciumcarbonat, aber auch Silikate, insbesondere Talk, Ton und Glimmer, und Sulfate, insbesondere Calcium- und Bariumsulfat, sowie Aluminiumhydroxid, Glas und Ruße. Neben diesen anorganischen kommen auch organische Materialien in Frage, z. B. Holz-, Rinden-, Borken- oder Getreide-Mehl sowie Cellulose-, Pulpe- oder Reisschalen-Pulver oder pulvrige Baumwoll-Linters bzw. Synthese-Fasern aus z. B.

Polyethylen oder Polyacrylnitril. Derartige Stoffe sind in dem erfindungsgemäßen 1-K-PU-Klebstoff allenfalls in Mengen vorhanden, die außerhalb des für Füllstoffe üblichen Bereiches vom mehr als 20 Gew.-% liegen, insbesondere in Mengen von weniger als 10 und vor allem weniger als 5 Gew.-%. Vorzugsweise sind Stoffe mit derartigen Funktionen überhaupt nicht in dem erfindungsgemäßen 1-K-PU-Klebstoff enthalten.

Für bestimmte Zwecke, z.B. um die Herstellung, die Lagerung oder die Anwendung des PU-Klebstoffes zu verbessern, können geringe Mengen an Stoffen zugesetzt werden, und zwar in einer Menge von 0 bis 2, vorzugsweise von 0,1 bis 1,0 Gew.-%, bezogen auf das PU-Prepolymere. Solche Additive können z.B. sein: Entschäumer, Netzmittel, Stabilisatoren, Schaum-Katalysatoren, insbesondere Katalysatoren. Konkret seien genannt: Dimorpholinodiethylether, N-Methylmorpholin, N-Ethylmorpholin und N,N,N',N'-Tetramethyl-2,2'-oxybis(ethylamin).

Der 1-K-PU-Klebstoff ist vorwiegend frei von Lösemitteln. Er kann aber bis zu 5 Gew.-%, insbesondere bis zu 2,5 Gew.-% an Lösemitteln enthalten, z.B. um das rheologische Verhalten, das Schaum-Verhalten oder die offene bzw. die Verarbeitungszeit zu beeinflussen. Als Lösemittel wird ein inerter Stoff angesehen, der bei Raumtemperatur flüssig ist und bis 200 °C bei Normaldruck siedet. Typische Lösemittel sind Ether, Ester, Ketone sowie aliphatische, cycloaliphatische oder aromatische Kohlenwasserstoffe.

Der 1-K-PU-Klebstoff ist ebenfalls vorwiegend frei von Weichmachern. Allenfalls bis zu 5 Gew.-%, bezogen auf das Prepolymer, können enthalten sein.

Der 1-K-PU-Klebstoff ist weiterhin vorwiegend frei von Wasser. Allenfalls bis zu 1 Gew.-%, bezogen auf das Prepolymer, können enthalten sein.

Aus den oben angegebenen Komponenten werden die erfindungsgemäßen 1-K-PU-Klebstoffe durch Mischen und Homogenisieren hergestellt. In der Regel geschieht das bei Raumtemperatur bzw. im Temperaturbereich von 15 bis 50, vorzugsweise 20 bis 35 °C. Wegen der Isocyanate muß ein Schutzgas verwendet werden.

Die erfindungsgemäßen 1-K-PU-Klebstoffe zeigen gegenüber den bekannten 1-K-PU-Klebstoffen vor allem Vorteile aufgrund ihres rheologischen Verhaltens auf. Sie verbinden eine hohe Spritzmenge, gemessen nach DIN EN 29048 bei gleichzeitig gutem Standvermögen, gemessen in Anlehnung an die DIN EN 27390. Mit diesen Eigenschaften ist es möglich, den Klebstoff als standfesten Konstruktions- und Montage-Klebestoff einzusetzen, und zwar durch eine einfache Applikation aus Druckdosen oder Kartuschen oder anderen geschlossenen Gefäßen, bei denen der Klebstoff durch eine enge Öffnung nach außen tritt. Aufgrund ihrer cremig pastösen Konsistenz können die erfindungsgemäßen Klebstoffe auch leicht auf größeren Flächen verteilt werden. Die erfindungsgemäßen PU-Klebstoffe zeichnen sich auch durch eine hohe Wasserfestigkeit, gemessen nach DIN EN 204 aus. So werden die Anforderungen der Beanspruchungsgruppe D4 nach DIN EN 204, Lagerungsfolge 5 mit einem Wert von größer als 4,0 N/mm² erfüllt. Auch die Wärmefestigkeit, gemessen nach WATT 91 ist mit größer als 7,0 N/mm² ausreichend hoch, um auch den Bereich des Fenster- und Türbaus abzudecken und somit auch im Außenbereich einsetzbar zu sein.
Darüber hinaus erfüllt der Klebstoff auch die typischen Eigenschaften eines Konstruktions- oder Montage-Klebstoffes: Er kann für hoch beanspruchte Verklebungen verwendet werden, die im ausgehärteten Zustand zur Verfestigung an verklebten Substraten merklich beitragen. Wegen seiner relativ hohen Anfangshaftung und seines hohen Standvermögens, eignet er sich auch sehr gut zum Zusammenbau von Gegenständen. Der erfindungsgemäße Klebstoff eignet sich auch für eine große Anzahl verschiedener Werkstoffe. So können Holz und Holzwerkstoffe miteinander verbunden werden. Bei den Holzwerkstoffen handelt es sich um Produkte, die durch Zerlegen des Holzes und anschließendes Zusammenfügen - in der Regel mit weiteren Stoffen - entstehen, z. B. Sperrholz, Spanplatte oder Faserplatte. Aber auch Holz und Holzwerkstoffe in Kombination mit z.B. Metallen wie Aluminium, Kupfer, Blei, Stahl, Zink oder mit Kunststoffen wie z.B. glasfaserverstärkte Kunststoffe (GFK), PVC, Polystyrol, Melamin, HPL oder Werkstoffe mineralischen Ursprungs wie z.B. Gipskarton, Keramik, Marmor, Beton, Estrich und Steine sind möglich. Derartige Werkstoffe werden kraftschlüssig, wärme- und wasserfest auf Dauer verbunden.

Die Erfindung wird nun im einzelnen an Hand der folgenden Beispiele beschrieben.

### Beispiele

I. Ausgangsstoffe
   1. Lupranol 1000, Polypropylenglykol, OHZ ca. 55, Fa. Elastorgran BASF,
   2. Lupranol 1100, Polypropylenglykol, OHZ ca. 110, Fa. Elastorgran BASF,
   3. Desmodur M 44, 4,4'-Diphenylmethandiisocyanat, NCO-Gehalt ca. 33 %, Fa. Bayer,
   4. Desmodur VKS 20F, 4,4'-Diphenylmethandiisocyanat mit polymeren Anteilen, NCO-Gehalt ca. 31 %, Fa. Bayer,
   5. Aerosil R 202, hydrophobe hochdisperse Kieselsäure, Fa. Degussa,
   6. Irgastab-DBTL, Dibutylzinndilaurat, Fa. Witco,
   7. Dabco DMDEE, 2,2'-Dimorpholinodiethylether, Fa. Air Products,
II. Herstellung der Prepolymeren
   Die Ausgangsstoffe wurden in der in Tabelle I angegebenen Menge eingesetzt. Zur besseren Vergleichbarkeit wurde bei allen hergestellten Prepolymeren das Verhältnis Lupranol 1000 zu Lupranol 1100 in etwa gleich gehalten (3,42:1,00). Außerdem sind zur besseren Vergleichbarkeit die Prepolymere A, B und C mit annähernd gleichem NCO-Gehalt bzw. annähernd gleichem NCO/OH-Verhältnis prepolymerisiert worden.
   Die angegebenen Polyole wurden bei 70 °C und 15 mbar in einem Labordissolver (PC-Laborsystem Dissolver, Typ LDV 1, Serie Nr. 112-99, Fa. PC Laborsystem GmbH) bei 200 Upm entwässert. Zur Kontrolle des Wassergehaltes folgte eine Wasserbestimmung nach Karl-Fischer. Die Polyole enthielten weniger als 400 ppm Wasser. Nach dem Abkühlen auf 50 °C wurde das Isocyanat unter Rühren zugegeben und unter Schutzgas bei 200 Upm weiter unter Normaldruck auf 60 °C aufgeheizt. Dann wurde der Katalysator zugegeben und weiter unter Schutzgas bei Normaldruck und 200 Upm prepolymerisiert. Durch exotherem Reaktion stieg die Temperatur auf ca. 95 °C. Nach etwa 10 min folgte die Bestimmung des NCO-Gehaltes. War der theoretische NCO-Wert mit einer Genauigkeit von +/- 0,4 % erreicht, wurde der Ansatz unter gleichen Rührbedingungen abgekühlt und ca. 10 min bei 10 mbar evakuiert. Das Belüften erfolgte mit Schutzgas.
   Charakterisierung der Prepolymeren durch NCO-Gehalt und Viskosität siehe Tabelle I.
III. Herstellung der Klebstoffe
   100 Gew.-Teile (GT) des Prepolymeren wurden in dem PC-Labordissolver bei 23 °C vorgelegt und die in Tabelle II angegebene Menge an Kieselsäure zugegeben. Unter Normaldruck und Schutzgas wurde innerhalb von 5 min die Kieselsäure eingearbeitet, wobei die Dissolverdrehzahl innerhalb dieser Zeit von 250 Upm kontinuierlich auf 1350 Upm gesteigert wurde. Die Temperatur des Ansatzes stieg dabei auf ca. 27 °C an. War die Kieselsäure zu diesem Zeitpunkt homogen eingearbeitet, wurde bei gleicher Dissolverleistung mind. 10 min ein Vakuum von mind. 15 mbar angelegt. Die Temperatur stieg dabei auf ca. 32 °C an. Der Ansatz wurde nach Fertigstellung mit Schutzgas belüftet. Die Prüfung der Klebstoffe erfolgte nach einer Standzeit von frühestens 24 h bei 23 °C. Die Ergebnisse sind in Tabelle II zusammengefaßt.
   Bei der Fertigung der Beispielansätze wurde bewußt auf den Zusatz eines Schaumkatalysators verzichtet, da die Beurteilung des Standvermögens sonst nicht über einen längeren Zeitraum durchführbar gewesen wäre, da das Ablaufverhalten aufgrund der früher beginnenden Reaktion des Klebstoffes mit der Raumfeuchte zur früheren Hautbildung und somit zur Beeinflussung des Standvermögens geführt hätte. Zur Beurteilung der Wasser- und Wärmefestigkeit im Beispiel Nr. 1 wurde dem Ansatz eine übliche Menge eines üblichen Schaumkatalysators zugesetzt. Es handelte sich dabei um 0,3 % DMDEE.
IV. Prüfmethoden
   1) Watt 91: Prüfmethode für Holzklebstoffe für nichttragende Bauteile. Bestimmung der Klebefestigkeit von Längsklebungen im Zugversuch in der Wärme (Allgemein gültiges Prüfverfahren).
   2) DIN EN 204: Beurteilung von Klebstoffen für nichttragende Bauteile zur Verbindung von Holz und Holzwerkstoffen, Deutsche Fassung EN 204 von 1991. Beanspruchungsgruppe D4 Lfd. Nr. 5 wurde zugrunde gelegt, in der ein Mindestwert von 4 N/mm² gefordert wird. Die Prüfkörperherstellung erfolgte nach DIN EN 205. Bestimmung der Klebefestigkeit von Längsklebungen im Zugversuch, Ausgabe Juli 1997.
   3) Viskositäten RTV ISO 2555, Brookfield RTV-DVII, bei 23 °C, Spindel 6/20 für Prepolymere und Spindel 7/20 für den Klebstoff.
   4) DIN EN 29048: Bestimmung der Verarbeitbarkeit von Dichtstoffen mit genormtem Gerät (ISO 9048: 1987) Deutsche Fassung EN 29048: 1990. Prüfbedingungen: Lochplatte d=4 mm, Prüftemperatur 23 °C, Ausspritzmenge: Angabe in g/min.
   5) DIN EN 27390: Bestimmung des Standvermögens (ISO 7390: 1987) Deutsche Fassung EN 27390: 1990. Die Prüfung des Standesvermögens wurde mit folgenden Abweichungen in Anlehnung an die DIN EN 27390 durchgeführt. Der Streifen aus Polyethylenfolie wurde nicht verwendet. Die Prüfung erfolgte bei 23 °C. Der Klebstoff wurde im U-Profil hängend geprüft. Gemessen wurde die Klebstoffmenge, die entweder aus dem Profil abgetropft oder herausgelaufen war bzw. die Menge an Klebstoff, die einen Bauch gebildet hatte.
   6) Bestimmung des Isocyanatgehaltes nach prEN 1242 vom September 1997.
   7) Bestimmung des Wassergehaltes nach Karl-Fischer.
V. Ergebnisse
   Die Beispiele zeigen, daß mit steigender Funktionalität des Polyisocyanates (von 2,0 auf 2,7) in der Reihenfolge der Prepolymeren (A>C>B>D)
   a) die Ausspritzmenge des 1-K-PU-Klebstoffes stark abnimmt (von 2,7 auf 0,9, und zwar trotz annähernd gleicher Viskosität!) und
   b) das Standvermögen ebenfalls abnimmt (d. h. der Meßwert nimm von 1,2 auf 9,3 zu).

**Tabelle I: Prepolymere**

| Prepolymer | A | B | C | D |
|---|---|---|---|---|
| I. Komponenten [Gew.-%] | | | | |
| - Lupranol 1000 | 43,16 | 42,51 | 42,86 | 33,22 |
| - Lupranol 1100 | 12,63 | 12,44 | 12,54 | 9,68 |
| - Desmodur M44 | 44,11 | 22,00 | 33,50 | 0 |
| - Desmodur VKS 20F | 0 | 22,95 | 11,00 | 57,00 |
| - Irgastab - DBTL | 0,10 | 0,10 | 0,10 | 0,10 |

| II. Eigenschaften | | | | |
|---|---|---|---|---|
| - Durchschnittliche Funktionalität | | | | |
| a) des Polyol-Gemisches | ca. 2,0 | ca. 2,0 | ca. 2,0 | ca. 2,0 |
| b) des Isocyanates | ca. 2,0 | ca. 2,36 | ca. 2,17 | ca. 2,7 |
| - NCO/OH-Verhältnis | 5,17 | 5,18 | 5,17 | 8,16 |
| - NCO-Gehalt [Gew.-%] | 11,74 | 11,60 | 11,67 | 15,5 |
| - Viskosität [Pas] (Brookfield, 23 °C, # 6/20 | 2,7 | 8,3 | 4,25 | 12,00 |

**Tabelle II: Klebstoffe**

| Klebstoff | 1 | 2 | 3 * | 4 * | 5 * | 6 * |
|---|---|---|---|---|---|---|
| I. Komponenten | | | | | | |
| - Prepolymer, Art | A | A | B | B | C | D |
| GT | 100 | 100 | 100 | 100 | 100 | 100 |
| - Aerosil R 202 GT | 5,3 | 6,3 | 5,3 | 4,2 | 4,8 | 4,4 |

| II. Eigenschaften | | | | | | |
|---|---|---|---|---|---|---|
| - Viskosität [Pas] bei 23 °C, # 7/20 | 59 | 85 | 83 | 61 | 63 | 85,5 |
| Brookfield | | | | | | |
| - Ausspritzmenge [kg/min] DIN EN 29048 | 2,7 | 2,6 | 1,1 | 1,3 | 2,0 | 0,9 |
| - Standvermögen in Anlehnung an DIN EN 27390 | | | | | | |
| a) nach 5 min [g] | 1,2 | 0,6 | 1,0 | 12 | 7,6 | 9,3 |
| b) nach 60 min [g] | 4,5 | 2,2 | 1,7 | 14 | 13 | 13 |
| - Wärmefestigkeit [N/mm²] Watt 91 | 8,5 | - | - | - - | - | |
| - Wasserfestigkeit [N/mm²] EN 204 D4 Ifd. Nr. 5 | 6,1 | - | - - | - | - | |

| | | | | | | |
|---|---|---|---|---|---|---|
| *nicht entsprechend der Erfindung | | | | | | |

## Patentansprüche

1. 1-Komponenten-Polyurethan-Klebstoff (1-K-PU-Klebstoff) auf der Basis mindestens eines NCO-terminierten PU-Prepolymeren und mindestens eines Verdickungsmittels sowie gegebenenfalls mindestens eines Additives, **dadurch gekennzeichnet, dass** er pastös ist und eine Viskosität von 20 bis 100 Pas bei Raumtemperatur (23°C), gemessen nach RTV ISO 2555, aufweist und dass
A) das NCO-terminierte PU-Prepolymer
a) weitgehend linear ist, wobei die durchschnittliche Funktionalität sowohl der Polyol-Komponente als auch der Polyisocyanat-Komponete kleiner als 2,15 ist,
b) aus einer Mischung der Polyol-Komponente und der Polyisocyanat-Komponente hergestellt wurde, in der das Molverhältnis NCO/OH im Bereich von 3,5 bis 7,5 lag,
c) einen NCO-Gehalt von 7,0 bis 15,0 Gew.-%, bezogen auf das Prepolymer, und
d) eine Viskosität nach Brookfield bei 23°C von 500 bis 12 000 mPas hat.
B) das Verdickungsmittel eine hochdisperse Kieselsäure in einer Konzentration von 2,0 bis 8,0 Gew.-%, bezogen auf das Prepolymer ist und
C) als Additiv jeweils weniger als 10 Gew.-%, bezogen auf das Prepolymer, enthalten ist.

2. 1-K-PU-Klebstoff nach Anspruch 1, **dadurch gekennzeichnet, dass** er in dem Sinne pastös ist, dass seine Ausspritzmenge nach DIN EN 29048 größer als 2 000 g/min und sein Standvermögen nach DIN EN 27390 kleiner als 6,0 nach 5 min ist.

3. 1-K-PU-Klebstoff nach Anspruch 1 oder 2, **dadurch gekennzeichnet, dass** die Polyol-Komponente mindestens ein Polyol aus der Gruppe, bestehend aus einem Polyesterpolyol und Polyetherpolyol enthält und dadurch, dass das durchschnittliche Molekulargewicht der Polyole im Bereich von 200 bis 8 000 g/Mol liegt.

4. 1-K-PU-Klebstoff nach Anspruch 1, **dadurch gekennzeichnet, dass** die hochdisperse Kieselsäure hydrophob ist.

5. 1-K-PU-Klebstoff nach Anspruch 1, **dadurch gekennzeichnet, dass** 0 bis 2 Gew.-%, bezogen auf das Prepolymer, an Additiven enthalten sind, z.B. Entschäumer, Netzmittel, Stabilisatoren und Schaumkatalysatoren.

6. 1-K-PU-Klebstoff nach Anspruch 1 in einer Druckdose oder Kartusche.

7. Verfahren zur Herstellung des 1-K-PU-Klebstoffes nach einem der Ansprüche 1 bis 6, **dadurch gekennzeichnet, dass** man das weitgehend lineare PU-Prepolymer und die hochdisperse Kieselsäure sowie gegebenenfalls die Additive mischt und homogenisiert.

8. Verwendung des 1-K-PU-Klebstoffes nach Anspruch 1 bis 6 bzw. des nach Anspruch 7 hergestellten 1-K-PU-Klebstoffes, **gekennzeichnet durch** seine Applikation aus Druckdosen oder Kartuschen.

## Claims

1. 1-Component polyurethane adhesive (1-C PU adhesive) based on at least one NCO-terminated PU prepolymer and at least one thickener and optionally at least one additive, **characterized in that** it is paste-like and has a viscosity of 20 to 100 Pas at room temperature (23°C), as measured to RTV ISO 2555, and **in that**
A) the NCO-terminated PU prepolymer
a) is substantially linear, the average functionality of both the polyol component and the polyisocyanate component is less than 2.15,
b) was prepared from a mixture of the polyol component and the polyisocyanate component in which the molar NCO/OH ratio was in the range from 3.5 to 7.5,
c) has an NCO content of 7.0 to 15.0% by weight, based on the prepolymer, and
d) has a Brookfield viscosity at 23°C of 500 to 12,000 mPas,
B) the thickener is a highly disperse silica in a concentration of 2.0 to 8.0% by weight, based on the prepolymer, and
C) as additive less than 10% by weight, based on the prepolymer, is present.

2. 1-C PU adhesive as claimed in claim 1, **characterized in that** it is paste-like to the extent that its expressed amount as measured to DIN EN 29048 is greater than 2,000 g/min. and its consistency as measured to DIN EN 27390 is below 6.0 after 5 mins.

3. 1-C PU adhesive as claimed in claim 1 or 2, **characterized in that** the polyol component contains at least one polyol from the group consisting of a polyester polyol and polyether polyol and **in that** the average molecular weight of the polyols is in the range from 200 to 8,000 g/mol.

4. 1-C PU adhesive as claimed in claim 1, **characterized in that** the highly disperse silica is hydrophobic.

5. 1-C PU adhesive as claimed in claim 1, **characterized in that** it contains 0 to 2% by weight, based on the prepolymer, of additives, for example defoamer, wetting agent, stabilizers and foam catalysts.

6. 1-C PU adhesive as claimed in claim 1 in a pressurized container or cartridge.

7. A process for the production of the 1-C PU adhesive claimed in any of claims 1 to 6, **characterized in that** the substantially linear PU prepolymer and the highly dispere silica and optionally the additives are mixed and homogenized.

8. The use of the 1-C PU adhesive claimed in claims 1 to 6 or the 1-C PU adhesive produced by the process claimed in claim 7, **characterized by** its application from pressurized containers or cartridges.

## Revendications

1. Colle polyuréthane à un composant (colle 1-K-PU) à base d'au moins un prépolymère PU à terminaison NCO et d'au moins un agent épaississant ainsi qu'éventuellement d'au moins un additif, **caractérisée en ce qu'**elle est pâteuse et présente une viscosité de 20 à 100 Pa.s à la température ambiante (23°C), mesurée selon RTV ISO 2555, et **en ce que**
A) le prépolymère PU à terminaison NCO
a) est dans un grande mesure linéaire, la fonctionnalité moyenne du composant polyol aussi bien que du composant polyisocyanate étant inférieure à 2,15,
b) est préparé à partir d'un mélange du composant polyol et du composant polyisocyanate, le rapport molaire NCO/OH étant compris dans la gamme de 3,5 à 7,5,
c) présente une teneur en NCO de 7,0 à 15,0 % en poids par rapport au prépolymère, et
d) présente une viscosité selon Brookfield à 23°C de 500 à 12 000 mPa.s,
B) l'agent épaississant est un acide silicique fortement dispersé en une concentration de 2,0 à 8,0 % en poids par rapport au prépolymère, et
C) la teneur en additif est toujours inférieure à 10 % en poids par rapport au prépolymère.

2. Colle 1-K-PU selon la revendication 1, **caractérisée en ce qu'**elle est pâteuse en ce sens que la quantité projetée par injection selon DIN EN 29048 est supérieure à 2000 g/min et que sa capacité à garder son état selon DIN EN 27390 est inférieure à 6,0 après 5 minutes.

3. Colle 1-K-PU selon la revendication 1 ou 2, **caractérisée en ce que** le composant polyol comprend au moins un polyol du groupe constitué par un polyesterpolyol et un polyétherpolyol et **en ce que** la masse moléculaire moyenne des polyols est comprise dans la gamme de 200 à 8000 g/mole.

4. Colle 1-K-PU selon la revendication 1, **caractérisée en ce que** l'acide silicique fortement dispersé est hydrophobe.

5. Colle 1-K-PU selon la revendication 1, **caractérisée en ce qu'**elle contient, par rapport au prépolymère, 0 à 2 % en poids d'additifs, par exemple des agents anti-moussage, des agents mouillants, des stabilisants et des catalyseurs de moussage.

6. Colle 1-K-PU selon la revendication 1, conditionnée en capsule sous pression ou en cartouche.

7. Procédé de préparation de colle 1-K-PU selon l'une quelconque des revendications 1 à 6, **caractérisé en ce que** l'on mélange et homogénéise le prépolymère de PU essentiellement linéaire et l'acide silicique fortement dispersé ainsi qu'éventuellement les additifs.

8. Utilisation de la colle 1-K-PU selon l'une quelconque des revendications 1 à 6 ou de la colle 1-K-PU préparée selon la revendication 7, **caractérisée par** l'application de la colle à partir de capsules sous pression ou de cartouches
